# EUROPÄISCHE PATENTANMELDUNG

(11) **EP 2 025 930 A2**
(43) Veröffentlichungstag der Anmeldung: **18.02.2009**
(21) Anmeldenummer: 08450113.9
(22) Anmeldetag: 24.07.2008
(51) Int. Cl.: F03G 7/04

(54) **Erdwärmesonde**

(30) Priorität: 13.08.2007 AT 4842007 U
(71) Anmelder: Ochsner, Karl, 4020 Linz (AT)
(72) Erfinder: Ochsner, Karl, 4020 Linz (AT)
(74) Vertreter: Hübscher, Helmut

(57) **Zusammenfassung**

Es wird eine Erdwärmesonde mit einem unten geschlossenen Wärmerohr (1) zur Aufnahme eines zweiphasigen Wärmeträgers und mit einem als Kondensator für den Wärmeträger dienenden Wärmetauscher (6) beschrieben, wobei das den Boden (3) des Wärmetauschergehäuses (4) durchsetzende obere Endstück (2) des Wärmerohres (1) im Bereich des Gehäusebodens (3) Durchtrittsöffnungen (7) für das Wärmeträgerkondensat aufweist. Um einen unnötigen Wärmeentzug aus dem Erdreich zu vermeiden, wird vorgeschlagen, dass das obere Endstück (2) des Wärmerohres (1) einen mit Hilfe eines Stelltriebes (10) betätigbaren Verschluss (8) aufweist.

## Beschreibung

Die Erfindung bezieht sich auf eine Erdwärmesonde mit einem unten geschlossenen Wärmerohr zur Aufnahme eines zweiphasigen Wärmeträgers und mit einem als Kondensator für den Wärmeträger dienenden Wärmetauscher, wobei das den Boden des Wärmetauschergehäuses durchsetzende obere Endstück des Wärmerohres im Bereich des Gehäusebodens Durchtrittsöffnungen für das Wärmeträgerkondensat aufweist.

Zur Nutzung der Erdwärme sind Erdwärmesonden bekannt (DE 203 20 409 U1), die wenigstens ein Wärmerohr mit einem zweiphasigen Wärmeträger, beispielsweise Kohlendioxid, aufweisen. Dieser durch die Erdwärme verdampfende Wärmeträger steigt innerhalb des unten geschlossenen Wärmerohres auf und wird mit Hilfe eines Wärmetauschers kondensiert, wobei das Wärmeträgerkondensat entlang der Innenwandung des Wärmerohres abfließt, um in einem Konvektionskreislauf durch die Erdwärme wieder verdampft zu werden. Die vom Wärmetauscher aufgenommene Kondensationswärme kann mit Hilfe einer Wärmepumpe, beispielsweise für die Erwärmung von Gebrauchswasser oder zum Betreiben einer Heizung, genützt werden. Nachteilig bei diesen bekannten Erdwärmesonden ist, dass auch bei fehlendem Wärmebedarf dem das Wärmerohr umgebenden Erdreich Wärme entzogen wird, weil selbst bei abgeschaltetem Wärmetauscher verdampfter Wärmeträger aus dem Wärmerohr in das Gehäuse des Wärmetauschers aufsteigt und über das Wärmetauschergehäuse Wärme abgibt.

Der Erfindung liegt somit die Aufgabe zugrunde, eine Erdwärmesonde der eingangs geschilderten Art so auszugestalten, dass ein unnötiger Wärmeentzug aus dem Erdreich vermieden werden kann.

Die Erfindung löst die gestellte Aufgabe dadurch, dass das obere Endstück des Wärmerohres einen mit Hilfe eines Stelltriebes betätigbaren Verschluss aufweist.

Durch das Verschließen des oberen Endstückes des Wärmerohres wird ein Wärmeeintrag in das Wärmetauschergehäuse durch den die Erdwärme aufnehmenden Wärmeträger weitgehend unterbunden. Der Wärmetransport innerhalb des Wärmerohres durch die unvermeidbare Konvektionsströmung des zweiphasigen Wärmeträgers kann in diesem Zusammenhang im Wesentlichen unberücksichtigt bleiben, weil die durch den Wärmeträger aufgenommene Wärme wieder an das Erdreich abgegeben wird. Für den Verschluss des oberen Endstückes des Wärmerohres ergeben sich einfache Steuerungsbedingungen. Der Stelltrieb für den Verschluss braucht ja lediglich in Abhängigkeit vom Betrieb der üblicherweise angeschlossenen Wärmepumpe angesteuert zu werden.

Die durch die Durchtrittsöffnungen für das Wärmeträgerkondensat bei verschlossenem Endstück des Wärmerohres in das Wärmetauschergehäuse entweichenden Mengen am Wärmeträgerdampf spielend hinsichtlich der zu vermeidenden Wärmeverluste in der Praxis kaum eine Rolle. Sollen auch diese Wärmeverluste unterbunden werden, so kann der Verschluss für das obere Endstück des Wärmerohres als ein auch die Durchtrittsöffnungen für das Wärmeträgerkondensat verschließendes Ventil ausgebildet werden. Mit der Betätigung des Stelltriebes für den Verschluss werden somit sowohl die Durchtrittsöffnungen im Endstück als auch das Endstück des Wärmerohres selbst geöffnet oder verschlossen.

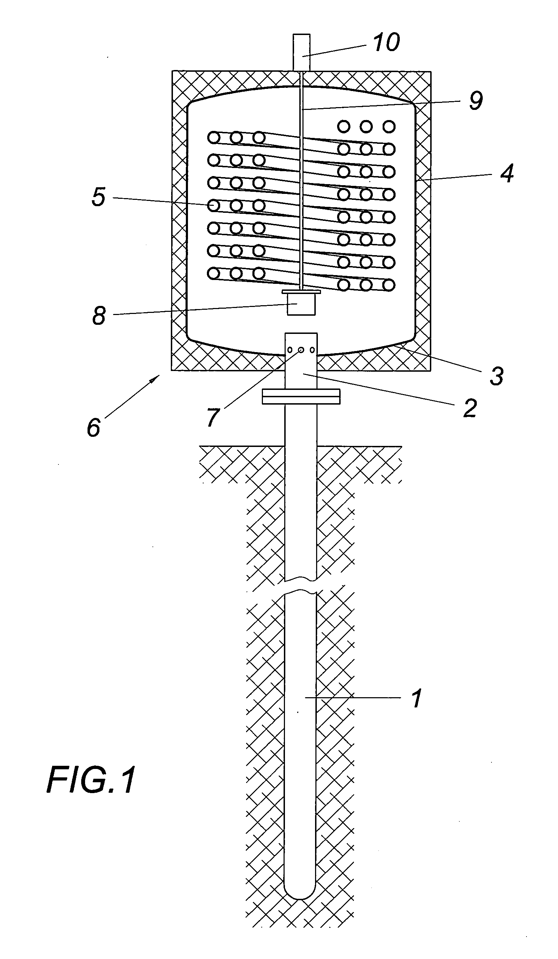

In der Zeichnung ist der Erfindungsgegenstand beispielsweise dargestellt. Es zeigen
- Fig. 1: eine erfindungsgemäße Erdwärmesonde in einem vereinfachten Längs- schnitt,
- Fig. 2: den Verschluss des Endstückes des Wärmerohres in einem Axialschnitt in einem größeren Maßstab und
- Fig. 3: eine der Fig. 2 entsprechende Darstellung einer Konstruktionsvariante eines erfindungsgemäßen Verschlusses.

Die dargestellte Erdwärmesonde weist ein in eine Erdbohrung eingesetztes, an seinem unteren Ende geschlossenes Wärmerohr 1 auf, an das ein oberes Endstück 2 angeflanscht ist. Mit diesem Endstück 2 durchsetzt das Wärmerohr 1 den Boden 3 eines Wärmetauschergehäuses 4, das wenigstens eine in mehreren Windungen verlegte Rohrschlange 5 für ein Kältemittel aufnimmt. Der dadurch gebildete Wärmetauscher 6 ist vorzugsweise in den Kältemittelkreis einer üblichen Wärmepumpe eingebunden.

Das Wärmerohr 1 führt einen zweiphasigen Wärmeträger, vorzugsweise Kohlendioxid, der Erdwärme aus dem ungebenden Erdreich über das Wärmerohr 1 aufnimmt und verdampft. Der Dampf strömt in das Gehäuse 4 des Wärmetauschers 6 und erwärmt das durch die Rohrschlange 5 geführte Kältemittel. Der Wärmeträger selbst wird dabei gekühlt und kondensiert, wobei das entstehende Wärmeträgerkondensat durch Durchtrittsöffnungen 7 im Bereich des Gehäusebodens 3 wieder in das Wärmerohr 1 zurückfließt. Mit der vom Kältemittel aufgenommenen Kondensationswärme wird die angeschlossene Wärmepumpe betrieben. Der Wärmetauscher 6 dient daher im Bereich des Konvektionskreislaufes des Wärmeträgers als Kondensator, im Zuge des Kältemittelkreises der Wärmepumpe jedoch als Verdampfer.

Damit bei Stillstand der Wärmepumpe dem Erdreich nicht unnötig Wärme über den Konvektionskreislauf des Wärmeträgers entzogen wird, ist das Endstück 2 des Wärmerohres 1 mit einem Verschluss 8 versehen, der über eine Stellstange 9 mit einem Stelltrieb 10 verbunden ist. Wird der Verschluss durch eine entsprechende Ansteuerung des Stelltriebes 10 geschlossen, so wird die Konvektionsströmung des Wärmeträgers auf den Bereich des Wärmerohres 1 beschränkt, sodass Wärmeverluste über das Gehäuse 4 des Wärmetauschers 6 vermieden werden.

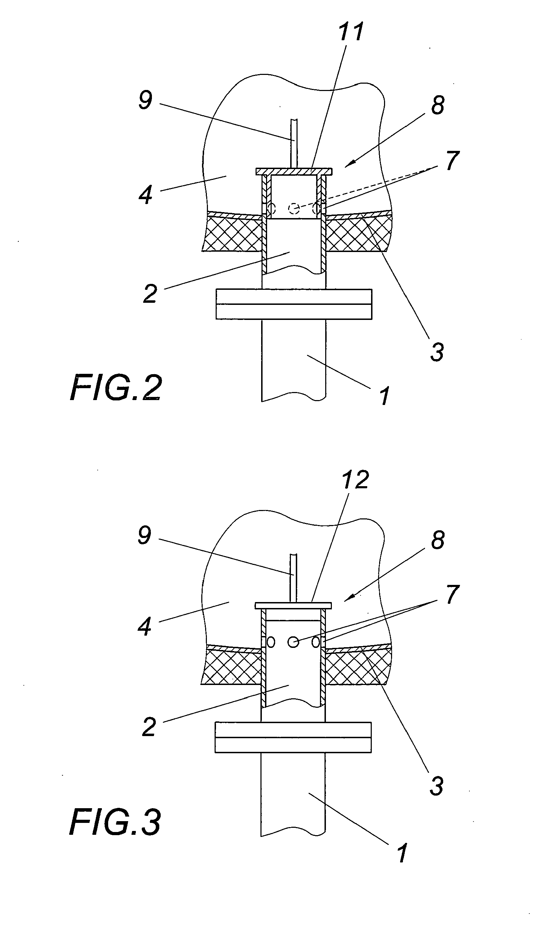

Gemäß der Fig. 2 bildet der Verschluss 8 einen topfartigen Ventilkörper 11, der in der gezeichneten Schließstellung nicht nur das Endstück 2 des Wärmerohres 1, sondern auch die Durchtrittsöffnungen 7 im Endstück 2 verschließt. In der Fig. 3 ist ein einfacherer Verschluss 8 dargestellt, bei dem der Ventilkörper 12 einen Abschlussdeckel für das Endstück 2 bildet. Da bei einer solchen Ausführungsform die Durchtrittsöffnungen 7 für das Wärmeträgerkondensat auch bei geschlossenem Endstück offen bleiben, wird ein geringfügiger Wärmeverlust in Kauf genommen, was jedoch im Hinblick auf die geringe Teilströmung des Wärmeträgers über das Gehäuse 4 des Wärmetauschers in der Praxis kaum eine Rolle spielt.

## Patentansprüche

1. Erdwärmesonde mit einem unten geschlossenen Wärmerohr (1) zur Aufnahme eines zweiphasigen Wärmeträgers und mit einem als Kondensator für den Wärmeträger dienenden Wärmetauscher (6), wobei das den Boden (3) des Wärmetauschergehäuses (4) durchsetzende obere Endstück (2) des Wärmerohres (1) im Bereich des Gehäusebodens (3) Durchtrittsöffnungen (7) für das Wärmeträgerkondensat aufweist, **dadurch gekennzeichnet, dass** das obere Endstück (2) des Wärmerohres (1) einen mit Hilfe eines Stelltriebes (10) betätigbaren Verschluss (8) aufweist.

2. Erdwärmesonde nach Anspruch 1, **dadurch gekennzeichnet, dass** der Verschluss (8) als ein auch die Durchtrittsöffnungen (7) für das Wärmeträgerkondensat verschließendes Ventil ausgebildet ist.
